# EUROPÄISCHE PATENTSCHRIFT

(11) **EP 2 235 029 B1**
(45) Veröffentlichungstag und Bekanntmachung des Hinweises auf die Patenterteilung: **21.09.2011**
(21) Anmeldenummer: 08867422.1
(22) Anmeldetag: 16.12.2008
(51) Int. Cl.: C07F 15/04, C08F 10/00, C08F 4/70

(54) **NICKELKOMPLEXVERBINDUNGEN ENTHALTEND DIARYLSULFID-LIGANDEN**
NICKEL COMPLEXING COMPOUNDS CONTAINING DIARYL SULFIDE LIGANDS
COMPLEXE DE NICKEL CONTENANT UN LIGAND DE SULFURE DE DIARYLE

(30) Priorität: 27.12.2007 EP 07150437
(43) Veröffentlichungstag der Anmeldung: 06.10.2010
(73) Patentinhaber: BASF SE, 67056 Ludwigshafen (DE)
(72) Erfinder: JAEKEL, Christoph, 67117 Limburgerhof (DE); STEINKE, Tobias Heinz, 67346 Speyer (DE); REIMER, Valentine, Bensheim 64625 (DE); GOVINDASWAMY, Padavattan, Heidelberg 69120 (DE); DIAZ-VALENZUELA, Maria-Belen, Jaen (ES)
(86) Internationale Anmeldenummer: PCT/EP2008/067593
(87) Internationale Veröffentlichungsnummer: WO 2009/083435

(56) Entgegenhaltungen:
- WO-A-97/02298

## Beschreibung

Die Erfindung betrifft Nickelkomplexverbindungen enthaltend Diarylsulfid-Liganden und deren Verwendung als Katalysator für die 1,4-selektive Polymerisation von 1,3-Dienen.

Die stereospezifische Polymerisation von Butadien oder Isopren in Gegenwart von Organometallkomplexen ist allgemein beschrieben in Ullmann's Encyclopedia of Industrial Chemistry, 5th Edition, Verlag Chemie Weinheim, 1993, Vol. A23, Seiten 273-282.

EP-A 1 788 003 beschreibt ein Nickel-basiertes Katalysatorsystem enthaltend eine nickelhaltige Verbindung, eine Organoaluminium-Verbindung als Alkylierungsagens, eine fluorhaltige Verbindung und eine chlorhaltige Verbindung für die stereospezifische Polymerisation von 1,3-Butadien zu cis-1,4-Polybutadien. Als nickelhaltige Verbindungen werden Dicarboxylate, Carboxylatborate, Organophosphate, Organophosphonate, Organophosphinate, Carbamate, Dithiocarbamate, Xanthate, β-Diketonate, Alkoxide, Aryloxide, Halogenide, Pseudohalogenide, Oxyhalogenide von Nickel sowie Organonickelverbindungen genannt. Als Alkylierungsagentien werden Organoaluminium- und Organomagnesium-Verbindungen genannt. Im Einzelnen offenbart wird eine Katalysatorzusammensetzung aus Nickel(II)neodecanoat-Borat, Trüsobutylaluminium, Bortrifluorid/n-Hexanol-Komplex und Zinntetrachlorid.

US 2003/0171209 A1 offenbart Komplexe von Kupfer, Gold und Mangan mit zweizähnigen schwefelhaltigen Liganden und deren Verwendung für die Polymerisation von Olefinen. Als zweizähnige schwefelhaltige Liganden werden im Einzelnen Bisimidazolyldithioalkane, speziell 1,7-Bis(5-methyl-4-imidazolyl)-2,6-dithioheptan und 1,6-Bis(5-methyl-4-imidazolyl)-2,5-dithiohexan genannt. In den Beispielen werden die schwefelhaltigen Komplexe zur Polymerisation beziehungsweise Copolymerisation von Ethylen und Alkylacrylaten eingesetzt, wobei in Gegenwart von Methylaluminoxan als aktivierendem Cokatalysator gearbeitet wird.

D. Neibecker und B. Castro, Inorg. Chem. 1980, 19, 3725-3729 beschreiben die Herstellung von n³-Allylbis(tetramethylthioharnstoff)nickel-Salzen durch Reaktion von Tetramethylthioharnstoff mit Allylhalogenid in Methanol und Zugabe einer wässrigen Lösung von NH₄ClO₄, NH₄BF₄, KPF₆ oder NaBPh₄. Eine Verwendung der erhaltenen kationischen n³-Allyl-Nickel-Komplexe wird nicht beschrieben.

WO 97/02298 beschreibt die Verwendung von Nickelkomplexen enthaltend stark koordinierende zweizähnige Aryl-S(CH₂)₂S-Aryl-Liganden für die Polymerisation von Ethylen, Norbonen und Styrolen.

Aufgabe der Erfindung ist es, weitere Katalysatoren für die 1,4-selektive Polymerisation von 1,3-Dienen bereitzustellen.

Gelöst wird die Aufgabe durch Nickelkomplexverbindungen der allgemeinen Formel (I) 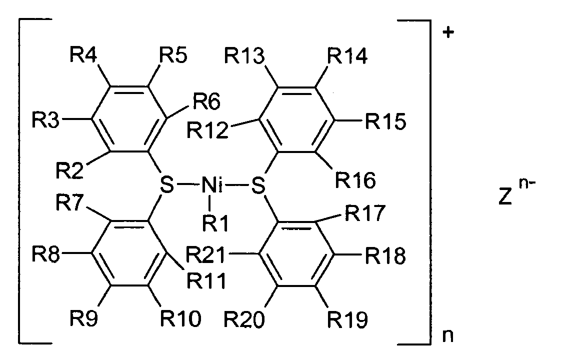 worin bedeuten:
R¹ einen anionischen Kohlenstoffliganden, vorzugsweise Allyl, substituiertes Allyl, Methallyl, Benzyl oder substituiertes Benzyl;
R²-R²¹, die gleich oder verschieden sein können, Wasserstoff, C₁-C₁₀-Alkyl, C₁-C₁₀-Alkoxy, C₆-C₁₀-Aryl, C₆-C₁₀-Aryloxy, C₂-C₁₀-Acyloxy, Carboxy, C₂-C₁₀-Carboxyalkyl, Carbamido, Carbamido-mono-C₁-C₁₀-alkyl, Carbamido-di-C₁-C₁₀-alkyl, Hydroxy, Halogen, Nitro und Cyano, wobei die Alkyl- beziehungsweise Arylreste ein- oder mehrfach, bevorzugt ein- bis dreifach, mit Hydroxy, Halogen, Alkoxy und/oder Oxo substituiert sein können, und wobei jeweils zwei benachbarte Reste R²-R²¹ einen vier- bis achtgliedrigen cycloaliphatischen Ring oder einen anellierten aromatischen Ring oder ein anelliertes aromatisches Ringsystem, welche ein- oder mehrfach, bevorzugt ein- bis dreifach, mit Hydroxy, Halogen, Alkoxy und/oder Oxo substituiert sein können, ausbilden können und wobei jeweils die Reste R² und R⁷, R¹⁶ und R¹⁷ eine verbrückende C₁-C₂-Alkylenkette, die mit Oxo substituiert sein kann, darstellen können;
n eine ganze Zahl von 1 bis 3;
Zⁿ⁻ ein nicht-koordinierendes komplexes Anion, vorzugsweise ein komplexes Anion enthaltend als zentrales Atom B, Al, Si, P, As, S, Se, Te, Cl oder I, beispielsweise BF₄⁻, B(C₆F₅)₄⁻, B(C₆H₃-3,5-(CF₃)₂)₄⁻, AlF₆³⁻, AlCl₄⁻, Al(OHC₃F₆)₄⁻, Al(OC₄F₉)₄⁻, SiF₆²-, PF₆⁻, AsF₆⁻, SbF₆⁻, SO₄²⁻, CF₃SO₃⁻, SeO₄²⁻, TeO₃F⁻, CIO₄⁻ oder IO₄⁻.

Bevorzugte C₁-C₁₀-Alkylreste sind C₁-C₆-Alkylreste, wie Methyl, Ethyl, Propyl, isoPropyl, 1-Butyl, iso-Butyl, sec.-Butyl, tert.-Butyl sowie die isomeren Pentyl- und Hexylreste. Diese können ein- oder mehrfach, bevorzugt ein- bis dreifach, mit Hydroxy und/oder Halogen (Fluor, Chlor, Brom, Iod, bevorzugt Fluor und Chlor) substituiert sein.

Bevorzugte C₆-C₁₀-Arylreste sind Phenyl und Naphthyl. Diese können ein- oder mehrfach, bevorzugt ein- bis dreifach, mit Hydroxy, Halogen (Fluor, Chlor, Brom, Iod, bevorzugt Fluor und Chlor), Alkoxy und Oxo substituiert sein.

Besonders bevorzugte Reste R²-R²¹ sind Wasserstoff, C₁-C₄-Alkyl, C₁-C₄-Alkoxy und Hydroxy.

Insbesondere bevorzugt stehen R², R⁶, R⁷, R¹¹, R¹², R¹⁶, R¹⁷ und R²¹ für Wasserstoff.

Sind jeweils zwei benachbarte Reste R²-R²¹ zu einem an den Benzol-Grundkörper anellierten aromatischen Ring oder Ringsystem verbunden, so handelt es sich bei dem kondensierten aromatischen Ringsystem insgesamt (einschließlich dem Benzol-Grundkörper) vorzugsweise um gegebenenfalls substituiertes Naphthyl, Phenantryl, Anthracenyl oder Xanthenyl.

Vorzugsweise sind in der Verbindung der Formel (I) R² und R¹⁶; R³ und R¹⁵; R⁴ und ^{R14}; R⁵ und R¹³; R⁶ und R¹²; R⁷ und R¹⁷; R⁸ und R¹⁸; R⁹ und R¹⁹; R¹⁰ und R²⁰; R¹¹ und R²¹ gleich. Besonders bevorzugt sind in der Verbindung der Formel (I) R², R¹⁶, R⁷ und R¹⁷; R³, R¹⁵, R⁸ und R¹⁸; R⁴, R¹⁴ , R⁹ und R¹⁹; R⁵, R¹³, R¹⁰ und R²⁰; und R⁶, R¹² , R¹¹ und R²¹ gleich.

Bevorzugt ist n = 1.

Bevorzugt ist Zⁿ⁻ ausgewählt aus BF₄⁻, B(C₆F₅)₄-, B(C₆H₃-3,5-(CF₃)₂)₄⁻, Al(OHC₃F₆)₄⁻, PF₆⁻, AsF₆⁻, SbF₆⁻, CF₃SO₃⁻ und CIO₄⁻.

R¹ ist vorzugsweise Allyl, substituiertes Allyl, Methallyl, Benzyl oder substituiertes Benzyl. Allyl bzw. Benzyl können beispielsweise mit C₁-C₆-Alkyl substituiert sein.

Die Nickelkomplexverbindungen der allgemeinen Formel (I) werden hergestellt durch Umsetzung einer den Liganden R¹ enthaltenden Nickel(II)komplexverbindung, wie

Allylnickel(II)chlorid, Allylnickel(II)bromid, Methallylnickel(II)chlorid, Methallylnickel(II)bromid, Benzytnicke)(II)ch)orid und Benzylnickel(II)bromid, mit dem als Liganden fungierenden Diarylsulfid und einem das nicht-koordinierende, komplexe Anion Zⁿ⁻ enthaltenden Salz, vorzugsweise in einer so genannten Eintopf-Reaktion durch Vermischen der an der Umsetzung beteiligten Komponenten in einem Lösungsmittel und Reagieren lassen.

Geeignete nicht-koordinierende Salze sind beispielsweise:
- NaB(C₆H₃-3,5-(CF₃)₂)₄, beschrieben in J. Campora et al., Chem. Commun., 2003, 78-79;
- TIOOCF₃, TIB(C₆F₅)₄, TIPF₆, TIB{3,5-C₆H₃(CF₃)₂}₄, LiAl{OC(CF₃)₃}₄ wie beschrieben in D. Alberti et al., Organometallics, 2005, 24, 3907-3915;
- NaBAryl₄, wie beschrieben in I. Hyder et al., Dalton Trans., 2007, 3000-3009;
- HPF₆, HBF₄, beschrieben in H. Adams et al., Dalton Trans., 2003, 625-630;
- LiPF₆, beschrieben in K. S. Min et al., Dalton Trans., 2003, 1126-1132;
- TIBF₄, wie beschrieben in R. M. Ceder et al., Dalton Trans., 2003, 3052-3059.

Geeignete substituierte Diarylsulfide können beispielsweise hergestellt werden wie beschrieben in J. R. Campbell und R. E. Hatton: The Preparation of Some Diaryl Sulfides and Sulfones, J. Org. Chem. 1961, 26, 2480 oder E. E. Reid, Organic Chemistry of Bivalent Sulfur, Vol. II, Chemical Publishing Co., Inc., New York, 1960, 28. Zahlreiche geeignete Diarylsulfide sind kommerziell erhältlich, beispielsweise Diphenylsulfid, Phenoxathiin, Phenyl-p-tolylsulfid, 4-(Phenylthio)anilin, 9H-Thioxanthen-9-on, 4-(m-Tolylthio)anilin, 4-[(4-Aminophenyl)sulfanyl]phenylamin, Thianthren, 4,4'-Thiodiphenol, Methylthioxanthen-9-on, 1-(2-(Phenylsulfanyl)phenyl)ethanon, 4-Acetyldiphenylsulfid, 1-Nitro-2-(phenylsulfanyl)benzol, 1-Nitro-4-(phenylsulfanyl)benzol, 4-(Phenylsulfanyl)phthalonitril, 10-Acetylphenothiazin, 2-Methoxy-10H-dibenzo(B,E)thiopyran-10-on, 4'-(m-Tolylthio)formanilid, 4-Nitrophenyl-o-tolylsulfid, 4-Nitrophenyl-m-tolylsulfid, 2-Nitrophenyl-o-tolylsulfid, 2-Nitrophenyl-m-tolylsulfid, 4-[(4-Nitrophenyl)sulfanyl]anilin, 2-Nitro-5-(phenylsulfanyl)anilin, 1-Methoxythianthren, 2-Chloro-9H-thioxanthen-9-on, 2-Chlorodibenzo(B,F)thiepin-10(11 H)-on, 4-Biphenylylphenylsulfid, 4-Bromophenylphenylsulfid, 2,4-Diethyl-9H-thioxanthen-9-on, 4-Isopropylphenyl-4-nitrophenylsulfid.

Die erfindungsgemäßen Nickelkomplexe der Formel (I) können beispielsweise wie nachfolgend beschrieben hergestellt werden durch ein Verfahren umfassend die Schritte (1) - (4):
- (1): Lösen des den Liganden R¹ enthaltenden Nickel(II)komplexsalzes, des Diarylsul- fids und des das nicht-koordinierende, komplexe Anion Zⁿ⁻ enthaltenden Salzes in einem geeigneten Lösungsmittel, beispielsweise Diethylether, Tetrahydrofuran, tert.-Butylmethylether oder 1,4-Dioxan, bei einer Temperatur von im Allgemeinen -100°C bis 25°C, vorzugsweise -80°C bis 0°C, besonders bevorzugt -60°C bis - 20°C;
- (2): Rühren über einen Zeitraum von im Allgemeinen 30 Minuten bis 2 Tagen, vor- zugsweise 30 Minuten bis 24 Stunden und besonders bevorzugt 30 Minuten bis 12 Stunden bei einer Temperatur von im Allgemeinen 0°C bis 50°C, vorzugswei- se 20 bis 50°C;
- (3): Abfiltrieren, gegebenenfalls nach vorausgegangenem Lösungsmittelaustausch; beispielsweise kann das Lösungsmittel abdestilliert und der Rückstand mit einem anderen Lösungsmittel, beispielsweise CH₂Cl₂, CHCl₃ oder Ethylacetat, aufge- nommen werden und anschließend filtriert werden;
- (4): Kristallisation des Produktes entweder durch langsames Entfernen des Lö- sungsmittels oder durch Änderung der Lösungsmittel-Polarität durch Zugabe ei- nes nichtpolaren Lösungsmittels, beispielsweise Hexan, Cyclohexan oder Pen- tan. Das Produkt kann abfiltriert und getrocknet werden. Zur Erhöhung der Pro- duktreinheit kann die Kristallisation ein- oder mehrfach wiederholt werden.

Die Erfindung betrifft auch die Verwendung der erfindungsgemäßen Nickelkomplexverbindungen der Formel (I) als Katalysator für die 1,4-selektive Polymerisation von 1,3-Dienen. Dabei kann die in dem Polymerisationssystem intermediär gebildete, katalytisch aktive Spezies selbstverständlich eine von der Formel (I) abweichende Struktur aufweisen.

Als 1,3-Diene kommen beispielsweise in Frage 1,3-Butadien, Isopren, 1,3-Pentadien, 1,3-Hexadien, 2,3-Dimethyl-1,3-butadien, 2-Ethyl-1,3-butadien, 2-Methyl-1,3-pentadien, 3-Methyl-1,3-pentadien, 4-Methyl-1,3-pentadien und 2,4-Hexadien. Bevorzugte 1,3-Diene sind 1,3-Butadien und Isopren.

Die Polymerisation der 1,3-Diene kann in Gegenwart eines Lösungs- oder Verdünnungsmittels als Lösungspolymerisation, als Fällungspolymerisation oder als Emulsionspolymerisation durchgeführt werden. Die Polymerisation kann auch in Abwesenheit eines Lösungs- oder Verdünnungsmittel als Substanzpolymerisation durchgeführt werden. Bevorzugt wird die Polymerisation als Lösungspolymerisation oder als Emulsionspolymerisation durchgeführt.

Die Polymerisation kann beispielsweise durchgeführt werden wie beschrieben in: Ullmann's Encyclopedia of Industrial Chemistry, 5th Edition, Verlag Chemie Weinheim, 1993, Vol. A23, Seiten 273-282; R. Taube und G. Sylvester: Stereospecific Polymerization of Butadiene or Isoprene, Applied Homogeneous Catalysis with Organometallic Complexes, herausgegeben von B. Cornils und W.A. Herrmann, Weinheim 1996, Seiten 280-317.

Im Allgemeinen werden bei der Polymerisation an den erfindungsgemäßen Nickelkomplexverbindungen cis-1,4-Polydiene gebildet, vorzugsweise mit einem Gehalt an cis-1,4-Verknüpfungen von mindestens 60 %, besonders bevorzugt von mindestens 80-98 %.

Die Erfindung wird durch die nachstehenden Beispiele näher erläutert.

### Beispiele

### Beispiel 1

Synthese von [Ni(η³-C₃H₅)(4,4'-Thio-bis(6-tert.-butyl-O-cresol)₂]B(C₆H₃-3,5-(CF₃)₂)₄

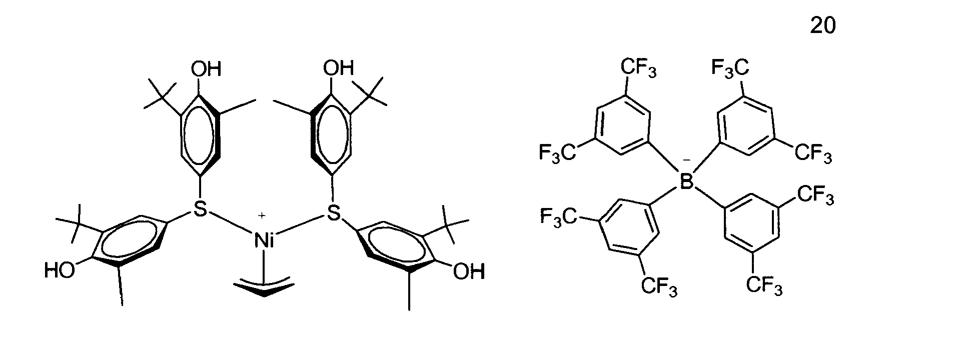

Eine Lösung von 4,4-Thio-bis(6-tert.-butyl-O-cresol) (0,136 g, 0,38 mmol) und NaB(C₆H₃-3,5-(CF₃)₂)₄ (0,688 g, 0,77 mmol) in 10 ml Diethylether wird bei -60°C zu einer gerührten Lösung von [Ni(η³-C₃H₅)(µ-Cl)]₂ (0,105 g, 0,38 mmol) in 30 ml Diethylether zugetropft. Nach 5 min wird das Kältebad entfernt und das Gemisch bei Raumtemperatur 45 min lang gerührt. Das Lösungsmittel wird im Vakuum abgezogen, der Rückstand mit 30 ml Dichlormethan extrahiert, die resultierende Lösung abfiltriert und eingedampft. Das Produkt wird zweimal aus einem Dichlormethan/Hexan-Gemisch umkristallisiert. Ausbeute: 0,133 g (0,076 mmol, 20 %). ¹H NMR (CD₂Cl₂, 20° C): δ 1,40 (s, 36H, *^{t}*Bu); 2,15 (s, 12H, C*H*₃); 2,83 (d., ³*J*_{H-H} = 14,2 Hz, 2H, allyl C*H*anti); 3,34 (d., ³*J*_{H-H} = 6,6 Hz, 2H, allyl-CHsyn); 5,12 (s, 4H, O*H*); 5,78 (m, allyl CHcentral); 6,88 (s, 4H, arom C*H*); 7,29 (s, 4H, arom C*H*); 7,58 (sa., 4H, C*H*p-Ar'); 7,74 (s., 8H, C*H*o-Ar').

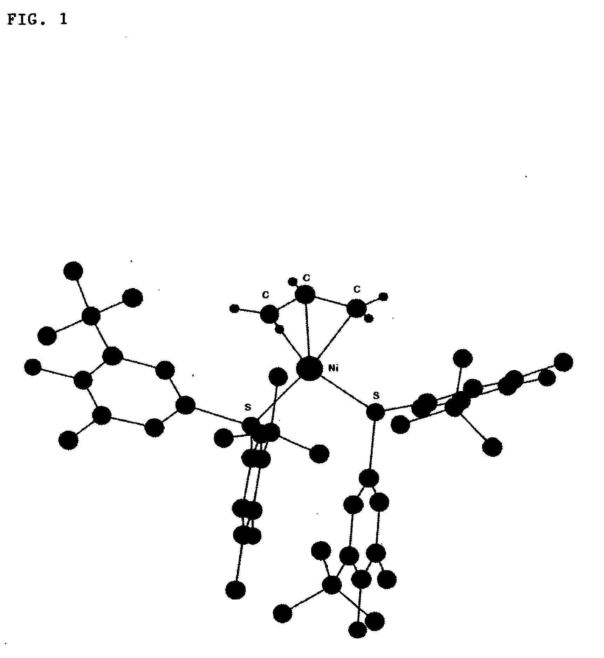

Die mittels Röntgenstrukturanalyse bestimmte räumliche Struktur des erhaltenen Nickelkomplexes ist in Figur 1 wiedergegeben.

### Beispiel 2

Synthese von [Ni(η³-C₃H₅)(PhSPh)₂]B(C₆H3-3,5-(CF₃)₂)₄

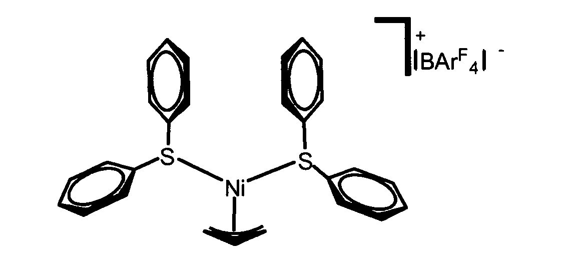

Eine Lösung aus Diphenylsulfid (71 mg, 0,38 mmol) und NaB(C₆H₃-3,5-(CF₃)₂)₄ (688 mg, 0,77 mmol) in 10 ml Diethylether wird bei -60°C zu einer gerührten Lösung von [Ni(η³-C₃H₅)(µ-Cl)]₂ (105 mg, 0,38 mmol) in 30 ml Diethylether zugegeben. Nach 5 min wird das Kältebad entfernt und das Gemisch 45 min lang bei Raumtemperatur gerührt. Das Lösungsmittel wird im Vakuum abgezogen, der Rückstand mit 30 ml Dichlormethan extrahiert, und die resultierende Lösung filtriert und eingeengt. Das Produkt wird zweimal aus einem Dichlormethan/Hexan-Gemisch umkristallisiert. Ausbeute: 90 mg. ¹H NMR (Cd₂Cl₂, 200 MHz): δ 2.85 (d, *³J_{H-H}* = 10.08 Hz, 2H, allyl CHanti), 3.48 (d, *³J_{N-H}* = 5.64 Hz, allyl CHsyn), 5.92 (m, allyl, CHcentral), 7.41 (m, 20H, Ph), 7.61 (s, 4H, arom CH), 7.83 (sa., 4H CHp-Ar').

### Beispiel 3

Polymerisation von Butadien in Gegenwart von [Ni(η³-C₃H₅)(4,4'-Thio-bis(6-*tert*.-butyl-O-cresol)₂]B(C₆H₃-3,5-(CF₃)₂)₄

Die gemäß Beispiel 1 hergestellte Nickelkomplexverbindung (5 mg; 2,8 x 10⁻³ mmol) wird in 15 ml Dichlormethan gelöst in einem mittels Ausflammen getrockneten Dreihals-Rundkolben vorgelegt und die Lösung auf -30°C gekühlt. Anschließend wird Butadien (3,4 g; 0,05 mmol) zugegeben und das Reaktionsgemisch 7 h lang bei -30°C gerührt. Nach Beendigung der Polymerisation werden 0,7 mg 2,6-Di-tert.-4-methylphenol zugegeben, um die Vernetzung zu inhibieren, und die Lösung wird in einen Kolben mit 15 ml kaltem Methanol pipettiert. Die Methanol-Lösung wird daraufhin milchig weiß, der Niederschlag wird über Nacht im Kühlschrank absetzen gelassen. Das überstehende Methanol wird anschließend dekantiert, und das Polymer über Nacht im Vakuum getrocknet. Das Molekulargewicht wird unter Verwendung von GPC analysiert. Das zahlenmittlere Molekulargewicht Mₙ des erhaltenen Polymers beträgt 52095 g/mol, das gewichtsmittlere Molekulargewicht M_{w} 76260 g/mol, und die Polydispersität 1,4. Die ¹³C-NMR-Analyse des Polymers nach Macromolecules, Vol. 7, No. 3, 1974, S. 348 zeigt überwiegend cis-1,4-Bindungen.

## Patentansprüche

1. Nickelkomplexverbindung der allgemeinen Formel (I) 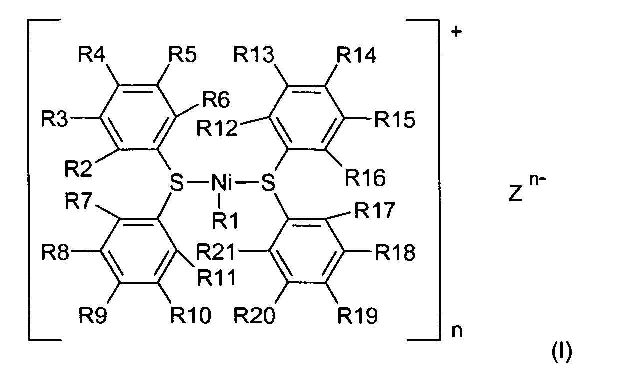 worin bedeuten:
R¹ einen anionischen Kohlenstoffliganden, vorzugsweise Allyl, substituiertes
Allyl, Methallyl, Benzyl oder substituiertes Benzyl;
R²-R²¹, die gleich oder verschieden sein können, Wasserstoff, C₁-C₁₀-Alkyl, C₁-C₁₀-Alkoxy, C₆-C₁₀-Aryl, C₆-C₁₀-Aryloxy, C₂-C₁₀-Acyloxy, Carboxy, C₂-C₁₀-Carboxyalkyl, Carbamido, Carbamido-mono-C₁-C₁₀-alkyl, Carbamido-di-C₁-C₁₀-alkyl, Hydroxy, Halogen, Nitro und Cyano, wobei die Alkyl- beziehungsweise Arylreste ein- oder mehrfach, bevorzugt ein- bis dreifach, mit Hydroxy, Halogen, Alkoxy und/oder Oxo substituiert sein können, und wobei jeweils zwei benachbarte Reste R²-R²¹ einen vier- bis achtgliedrigen cycloaliphatischen Ring oder einen anellierten aromatischen Ring oder ein anelliertes aromatisches Ringsystem, welche ein- oder mehrfach, bevorzugt ein- bis dreifach, mit Hydroxy, Halogen, Alkoxy und/oder Oxo substituiert sein können, ausbilden können und wobei jeweils die Reste R² und R⁷, R¹⁶ und R¹⁷ eine verbrückende C₁-C₂-Alkylenkette, die mit Oxo substituiert sein kann, darstellen können;
n eine ganze Zahl von 1 bis 3;
Zⁿ⁻ ein nicht-koordinierendes komplexes Anion.

2. Nickelkomplexverbindung nach Anspruch 1, **dadurch gekennzeichnet, dass** Zⁿ⁻ ausgewählt ist aus der Gruppe bestehend aus BF₄⁻, B(C₆F₅)₄⁻, B(C₆H₃-3,5-(CF₃)₂)₄⁻,, AlF₆³⁻, AlCl₄⁻, Al(OHC₃F₆)₄⁻, Al(OC₄F₉)₄⁻, SiF₆²⁻, PF₆⁻, AsF₆⁻, SbF₆⁻, SO₄²⁻, CF₃SO₃⁻, SeO₄²⁻, TeO₃F⁻, ClO₄⁻, IO₄⁻.

3. Nickelkomplexverbindung nach Anspruch 1 oder 2, **dadurch gekennzeichnet, dass** die Reste R²-R²¹ ausgewählt sind aus der Gruppe bestehend aus Wasserstoff, C₁-C₄-Alkyl, C₁-C₄-Alkoxy und Hydroxy.

4. Nickelkomplexverbindung nach einem der Ansprüche 1 bis 3, **dadurch gekennzeichnet, dass** R² und R¹⁶; R³ und R¹⁵; R⁴ und R¹⁴; R⁵ und R¹³; R⁶ und R¹²; R⁷ und R¹⁷; R⁸ und R¹⁸; R⁹ und R¹⁹; R¹⁰ und R²⁰; R¹¹ und R²¹ gleich sind.

5. Nickelkomplexverbindung nach einem der Ansprüche 1 bis 4, **dadurch gekennzeichnet, dass** R², R¹⁶, R⁷ und R¹⁷; R³, R¹⁵, R⁸ und R¹⁸; R⁴, R¹⁴, R⁹ und R¹⁹; R⁵, R¹³, R¹⁰ und R²⁰; und R⁶, R¹², R¹¹ und R²¹ gleich sind.

6. Nickelkomplexverbindung nach einem der Ansprüche 1 bis 5, **dadurch gekennzeichnet, dass** R¹ ausgewählt ist aus Allyl, substituiertem Allyl, Methallyl, Benzyl oder substituiertem Benzyl.

7. Nickelkomplexverbindung nach einem der Ansprüche 1 bis 6, **dadurch gekennzeichnet, dass** R⁶, R⁷, R¹¹, R¹², R¹⁶, R¹7, R²¹ Wasserstoff sind.

8. Verwendung von Nickelkomplexverbindungen der Formel (I) gemäß einem der Ansprüche 1 bis 7 als Katalysator für die 1,4-selektive Polymerisation von Dienen.

9. Verwendung nach Anspruch 8 für die 1,4-selektive Polymerisation von 1,3-Butadien oder Isopren.

10. Verwendung nach einem der Ansprüche 8 oder 9, **dadurch gekennzeichnet, dass** die Polymerisation als Lösungspolymerisation oder Emulsionspolymerisation durchgeführt wird.

## Claims

1. A nickel complex of the general formula (I) 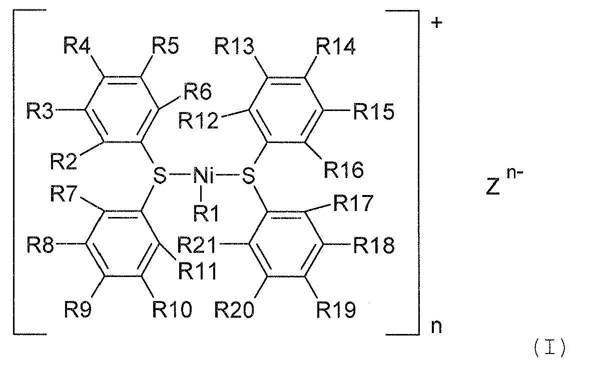 where:
R¹ is an anionic carbon ligand, preferably allyl,
substituted allyl, methallyl, benzyl or substituted benzyl;
R²-R²¹ can be identical or different and can each be hydrogen, C₁-C₁₀-alkyl, C₁-C₁₀-alkoxy, C₆-C₁₀-aryl, C₆-C₁₀-aryloxy, C₂-C₁₀-acyloxy, carboxy, C₂-C₁₀-carboxyalkyl, carbamido, carbamidomono-C₁-C₁₀-alkyl, carbamidodi-C₁-C₁₀-alkyl, hydroxy, halogen, nitro and cyano, where the alkyl or aryl radicals may be monosubstituted or polysubstituted, preferably monosubstituted to trisubstituted, by hydroxy, halogen, alkoxy and/or oxo and two adjacent radicals R²-R²¹ can form a four- to eight-membered cycloaliphatic ring or a fused aromatic ring or a fused aromatic ring system which may be monosubstituted or polysubstituted, preferably monosubstituted to trisubstituted, by hydroxy, halogen, alkoxy and/or oxo and the radicals R² and R⁷, R¹⁵ and R¹⁷ can form a bridging C₁-C₂-alkylene chain which may be substituted by oxo;
n is an integer from 1 to 3;
Zⁿ⁻ is a non-coordinating complex anion.

2. The nickel complex according to claim 1, wherein Zⁿ⁻ is selected from the group consisting of BF₄⁻, B(C₆F₅)4⁻, B(C₆H₃-3,5-(CF₃)₂)₄⁻,, AlF₆³⁻, AlCl₄⁻, Al (OHC₃F₆)₄⁻, Al(OC₄F₉)₄, SiF6²⁻, PF₆⁻, AsF₆⁻, SbF₆⁻, SO₄²⁻, CF₃SO₃⁻, SeO₄²⁻, TeO₃F⁻, ClO₄⁻, IO₄⁻.

3. The nickel complex according to claim 1 or 2, wherein the radicals R²-R²¹ are selected from the group consisting of hydrogen, C₁-C₄-alkyl, C₁-C₄-alkoxy and hydroxy.

4. The nickel complex according to any of claims 1 to 3, wherein R² and R¹⁶; R³ and R¹⁵; R⁴ and R¹⁴_{;} R⁵ and R¹³; R⁶ and R¹²; R⁷ and R¹⁷; R⁸ and R¹⁸_{;} R⁹ and R¹⁹_{;} R¹⁰ and R²⁰; R¹¹ and R²¹ are identical.

5. The nickel complex according to any of claims 1 to 4, wherein R², R¹⁶, R⁷ and R¹⁷; R³, R¹⁵, R⁸ and R¹⁸_{;} R⁴, R¹⁴, R⁹ and R¹⁹_{;} R⁵, R¹³, R¹⁰ and R²⁰_{;} and R⁶, R¹², R¹¹ and R²¹ are identical.

6. The nickel complex according to any of claims 1 to 5, wherein R¹ is selected from among allyl, substituted allyl, methallyl, benzyl and substituted benzyl.

7. The nickel complex according to any of claims 1 to 6, wherein R⁶, R⁷, R¹¹, R¹², R¹⁶, R¹⁷, R²¹ are each hydrogen.

8. The use of nickel complexes of the formula (I) according to any of claims 1 to 7 as catalyst for the 1,4-selective polymerization of dienes.

9. The use according to claim 8 for the 1,4-elective polymerization of 1,3-butadiene or isoprene.

10. The use according to either claim 8 or 9, wherein the polymerization is carried out as a solution polymerization or an emulsion polymerization.

## Revendications

1. Composé complexe du nickel de formule générale (I) 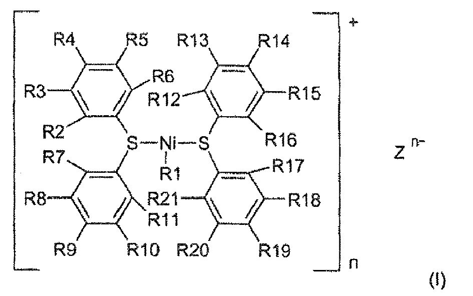 où
R¹ signifie un ligand carboné anionique, de
préférence allyle, allyle substitué, méthallyle, benzyle ou benzyle substitué ;
R²-R²¹, qui peuvent être identiques ou différents,
signifient hydrogène, C₁-C₁₀-alkyle, C₁-C₁₀-alcoxy, C₆-C₁₀-aryle, C₆-C₁₀-aryloxy, C₂-C₁₀-acyloxy, carboxy, C₂-C₁₀-carboxyalkyle, carbamido, carbamido-mono-C₁-C₁₀-alkyle, carbamido-di-C₁-C₁₀-alkyle, hydroxy, halogène, nitro et cyano, où les radicaux alkyle ou, selon le cas, aryle peuvent être monosubstitués ou polysubstitués, de préférence monosubstitués à trisubstitués par hydroxy, halogène, alcoxy et/ou oxo, et où à chaque fois deux radicaux adjacents R²-R²¹ peuvent former un cycle cycloaliphatique de quatre à huit chaînons ou un cycle aromatique annelé ou un système cyclique aromatique annelé, qui peuvent être monosubstitués ou polysubstitués, de préférence monosubstitués à trisubstitués par hydroxy, halogène, alcoxy et/ou oxo et où à chaque fois les radicaux R² et R⁷, R¹⁶ et R¹⁷ peuvent représenter une chaîne C₁-C₂-alkylène formant un pont qui peut être substituée par oxo ;
n vaut un nombre entier de 1 à 3 ;
Zⁿ⁻ signifie un anion complexe non coordinant.

2. Composé complexe du nickel selon la revendication 1, **caractérisé en ce que** Zⁿ⁻ est choisi dans le groupe constitué par BF₄-, B (C₆F₅)₄⁻, B(C₆H₃-3,5-(CF₃)₂)₄-, AlF₆³⁻, AlCl₄⁻, Al (OHC₃F₆)₄⁻, Al (OC₄F₉)₄⁻, SiF₆²⁻, PF₆⁻, AₛF₆⁻, SbF₆, SO₄²⁻, CF₃SO₃⁻, SeO₄²⁻, TeO₃F⁻, ClO₄⁻, IO₄⁻.

3. Composé complexe du nickel selon la revendication 1 ou 2, **caractérisé en ce que** les radicaux R²-R²¹ sont choisis dans le groupe constitué par hydrogène, C₁-C₄-alkyle, C₁-C₄-alcoxy et hydroxy.

4. Composé complexe du nickel selon l'une quelconque des revendications 1 à 3, **caractérisé en ce que** R² et R¹⁶; R³ et R¹⁵; R⁴ et R¹⁴; R⁵ et R¹³; R⁶ et R¹²; R⁷ et R¹7; R⁸ et R¹⁸; R⁹ et R¹⁹; R¹⁰ et R²⁰; R¹¹ et R²¹ sont identiques.

5. Composé complexe du nickel selon l'une quelconque des revendications 1 à 4, **caractérisé en ce que** R², R¹⁶, R⁷ et R¹⁷; R³, R¹⁵, R⁸ et R¹⁸; R⁴, R¹⁴, R⁹ et R¹⁹_{;} R⁵, R¹³, R¹⁰ et R²⁰_{;} et R⁶, R¹², R¹¹ et R²¹ sont identiques.

6. Composé complexe du nickel selon l'une quelconque des revendications 1 à 5, **caractérisé en ce que** R¹ est choisi parmi allyle, allyle substitué, méthallyle, benzyle ou benzyle substitué.

7. Composé complexe du nickel selon l'une quelconque des revendications 1 à 6, **caractérisé en ce que** R⁶, R⁷, R¹¹, R¹², R¹⁶, R¹⁷, R²¹ représentent hydrogène.

8. Utilisation de composés complexes du nickel de formule (I) selon l'une quelconque des revendications 1 à 7 comme catalyseur pour la polymérisation 1,4-sélective de diènes.

9. Utilisation selon la revendication 8 pour la polymérisation 1,4-sélective de 1,3-butadiène ou d'isoprène.

10. Utilisation selon l'une quelconque des revendications 8 ou 9, **caractérisée en ce que** la polymérisation est réalisée en tant que polymérisation en solution ou polymérisation en émulsion.
